# EUROPÄISCHE PATENTSCHRIFT

(11) **EP 3 280 931 B1**
(45) Veröffentlichungstag und Bekanntmachung des Hinweises auf die Patenterteilung: **17.03.2021**
(21) Anmeldenummer: 16714408.8
(22) Anmeldetag: 04.04.2016
(51) Int. Cl.: F16H 37/04

(54) **ANTRIEBSSTRANG FÜR EIN LANDWIRTSCHAFTLICHES ARBEITSFAHRZEUG**
DRIVE TRAIN FOR AN AGRICULTURAL WORKING VEHICLE
CHAÎNE CINÉMATIQUE POUR UN ENGIN DE TRAVAIL AGRICOLE

(30) Priorität: 07.04.2015 DE 102015206160
(43) Veröffentlichungstag der Anmeldung: 14.02.2018
(73) Patentinhaber: Deere & Company, Moline, IL 61265-8098 (US)
(72) Erfinder: BUHRKE, Frank, Birkenau 69488 (DE)
(74) Vertreter: Dehnhardt, Florian Christopher
(86) Internationale Anmeldenummer: PCT/EP2016/057345
(87) Internationale Veröffentlichungsnummer: WO 2016/162304

(56) Entgegenhaltungen:
- DE-A1-102011 080 562
- DE-A1-102011 081 520
- DE-A1-102013 110 709
- US-A- 4 858 495

## Beschreibung

Die Erfindung betrifft einen Antriebsstrang für ein landwirtschaftliches Arbeitsfahrzeug, umfassend einen Antriebsmotor, ein Schaltgetriebe und eine über den Antriebsmotor und das Schaltgetriebe angetriebene Fahrzeugachse, ein zwischen dem Schaltgetriebe und der Fahrzeugachse angeordnetes Nachschaltgetriebe mit mindestens zwei Übersetzungen.

Bei Arbeitsfahrzeugen, insbesondere landwirtschaftlichen Nutzfahrzeugen wie Traktoren, werden in der Regel Getriebeanordnungen mit einer Vielzahl von Gängen eingesetzt, sofern nicht stufenlose Getriebe zum Einsatz kommen. Im Stand der Technik sind Getriebeanordnungen bekannt, die mehrere hintereinander angeordnete Getriebeeinheiten aufweisen. Derartige Getriebeanordnungen dienen dazu, den hohen Anforderungen in Bezug auf eine möglichst feinstufige Abstufung aber auch weite Spreizung der Getriebeübersetzungen gerecht zu werden. So kann beispielsweise eine typische Konfiguration einer Getriebeanordnung aus einem mehrstufigen Hauptgetriebe und einer nachgeschalteten Bereichsgruppe bestehen. In landwirtschaftlichen Nutzfahrzeugen werden zudem sogenannte Reversiereinheiten und bei Bedarf Kriechganguntersetzungen vorgesehen. Das Hauptgetriebe wird regelmäßig lastschaltfähig ausgelegt, wobei es prinzipiell als Planetenradgetriebe oder als Parallelschaltgetriebe aufgebaut sein kann. Grundsätzlich herrscht bei der Auslegung von Getriebe- und Antriebskomponenten ein Zielkonflikt zwischen gewünschter Funktionalität und zur Verfügung stehendem Bauraum. So liegt beispielsweise in Traktoren der 130-PS-Klasse die Anzahl der lastschaltbaren Gänge üblicherweise bei 3 bis 5. Unter Funktionalitätsgesichtspunkten wären allerdings sowohl für Feldarbeiten als auch für Transportarbeiten 6 oder 8 lastschaltbare Gänge wünschenswert. Selbst wenn dies in einem preislich vertretbaren Rahmen darstellbar ist, bleibt immer noch das Problem zu lösen, diese zusätzlichen lastschalbaren Gänge in den bestehendem Bauraum zu integrieren.

Die DE 10 2005 030 987 A1 beschreibt einen Antriebsstrang mit einem Doppelkupplungsgetriebe als Hauptgetriebe und einem nachgelagerten Nachschaltgetriebe. Das Nachschaltgetriebe ist in Vorgelegebauweise ausgeführt. Über eine Schalteinrichtung wird in einer ersten Schaltstellung ein direkter Durchtrieb über die Hauptwelle und in einer zweiten Schaltstellung ein Antrieb über die Vorgelegewelle hergestellt. Als unzureichend könnte hierbei erachtet werden, dass das Umschalten innerhalb des Nachschaltgetriebes nicht unter Last erfolgen kann, da für beide Übersetzung nur eine Schalteinrichtung vorgesehen ist.

DE 102011081520 A1 offenbart einen Antriebsstrang für ein landwirtschaftliches Arbeitsfahrzeug, umfassend einen Antriebsmotor, ein lastschaltfähiges Getriebe und eine über das lastschaltfähige Getriebe angetriebene Fahrzeugachse, ein zwischen dem lastschaltfähigen Getriebe und der Fahrzeugachse angeordnetes Nachschaltgetriebe mit zwei Übersetzungen und ein zwischen dem Nachschaltgetriebe und der Fahrzeugachse angeordnetes Gruppenschaltgetriebe.

Ausgehend hiervon besteht die Aufgabe der vorliegenden Erfindung darin, eine im Hinblick auf Lastschaltbarkeit weiter verbesserte Funktionalität in einem Antriebsstrang bereitzustellen.

Die Aufgabe wird gelöst durch einen Antriebsstrang gemäß Anspruch 1. Die abhängigen Ansprüche betreffen besondere Ausführungsarten der Erfindung gemäß Anspruch 1.

Erfindungsgemäß ist ein Nachschaltgetriebe vorgesehen, wodurch in Kombination mit einem bestehenden, ebenfalls lastschaltfähigen Hauptgetriebe eine Verdoppelung der Anzahl der Gänge dieses Hauptschaltgetriebes erreicht wird. Bevorzugt sind das erste und das zweite Schaltelement als hydraulisch angesteuerte Nasskupplungen ausgeführt. Die hydraulische Ansteuerung der beiden Schaltelemente kann mit der hydraulischen Steuerung des Hauptschaltgetriebes verbunden werden. Bevorzugt ist das Hauptschaltgetriebe als lastschaltfähiges Getriebe mit einer geometrischen Stufung von ungefähr 20% ausgeführt. Dies führt zu einer engen Stufung der Gänge bei gleichzeitig großer Spreizung des Getriebes.

Erfindungsgemäß ist zwischen dem Nachschaltgetriebe und der Fahrzeugachse ein Gruppenschaltgetriebe angeordnet. Hierdurch kann die Spreizung des Getriebes weiter vergrößert werden und gleichzeitig eine hohe Fahrzeugendgeschwindigkeit bei reduzierter Motordrehzahl erreicht werden.

Bevorzugt ist das Nachschaltgetriebe in Vorgelegebauweise ausgeführt. Dies ist konstruktiv einfach darstellbar.

Erfindungsgemäß ist ein Stirnrad einer ausgangsseitigen Stirnradstufe des Nachschaltgetriebes integraler Bestandteil des Gruppenschaltgetriebes. Hierdurch greift das Nachschaltgetriebe auf ein ohnehin bereits vorhandenes Bauteil in dem Gruppenschaltgetriebe zurück, so dass Kosten gespart werden.

Bevorzugt ist die ausgangsseitige Stirnradstufe des Nachschaltgetriebes in einem Gehäuse des Gruppenschaltgetriebes angeordnet. Hierdurch lässt sich der Zuwachs an axialer Breites des Antriebsstranges infolge Einbaus des Nachschaltgetriebes auf ein Minimum beschränken.

Die Aufgabe wird ferner gelöst durch ein Verfahren zur Steuerung eines Antriebsstrangs nach einem der Ansprüche 1 bis 5 mit einem zwischen dem Antriebsmotor und dem Nachschaltgetriebe als Anfahrkupplung geeigneten dritten Schaltelement, bei dem während einem Umschalten des Kraftschlusses von dem ersten oder dem zweiten Schaltelement auf das jeweils andere Schaltelement das dritte Schaltelement zur Antriebskraftunterbrechung moduliert wird. Hierdurch ist es möglich das erste und zweite Schaltelement mit einer reduzierten Kupplungskapazität auszulegen, da zumindest ein Teil des während eine Schaltvorganges zur Drehzahlangleichung erforderliche Schlupf durch das dritte Schaltelement gewährleistet wird, welches prinzipbedingt mit einer hohen Kupplungskapazität ausgelegt ist.

Die vorliegende Erfindung wird anhand der nachfolgenden Figuren beschrieben. Hierin zeigen
- Figur 1: ein landwirtschaftliches Arbeitsfahrzeug mit einem erfindungsgemäßen Antriebsstrang und
- Figur 2: ein Getriebeschema eines erfindungsgemäßen Antriebsstrangs.

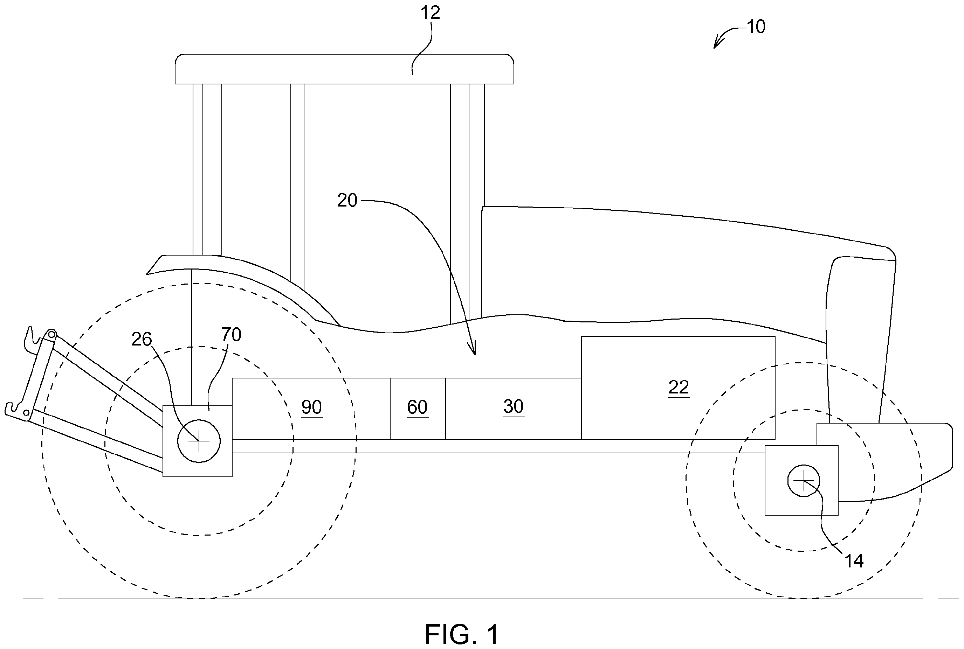

Die Figur 1 zeigt ein landwirtschaftliches Arbeitsfahrzeug 10 in Gestalt eines Traktors mit einem erfindungsgemäßen Antriebsstrang 20 in einer möglichen Ausführungsform. Das Arbeitsfahrzeug 10 umfasst ferner eine Kabine 12, eine vordere Fahrzeugachse 14 und einer hintere Fahrzeugachse 26. Die vordere Fahrzeugachse 14 und die hintere Fahrzeugachse 26 sind Teil des Antriebsstrangs 20, wobei die hintere Fahrzeugachse 26 in der Regel permanent und die vordere Fahrzeugachse 14 in der Regel bedarfsweise zuschaltbar angetrieben werden.

Der Antriebsstrang 20 umfasst ferner einen Antriebsmotor 22, der als Verbrennungskraftmaschine ausgeführt sein kann, und eine Getriebestruktur, die, wie nachfolgend beschrieben, aus verschiedenen einzelnen Getriebekomponenten zusammengesetzt sein kann. In der vorliegend beschriebenen Getriebestruktur kann im Kraft- und Momentenfluss ausgehend von dem Antriebsmotor 22 ein Hauptschaltgetriebe 30, ein Nachschaltgetriebe 60, ein Gruppenschaltgetriebe 90 und ein Differentialgetriebe 100 vorgesehen sein. Das Hauptschaltgetriebe 30 kann als Parallelschaltgetriebe oder als Planetenradgetriebe ausgeführt sein. Weiterhin kann in das Hauptschaltgetriebe 30 eine Reversiereinheit integriert sein. Auf eine Darstellung des Abtriebs des bedarfsweise zuschaltbaren Vorderradantriebs aus dem Gruppenschaltgetriebe 90 wurde verzichtet.

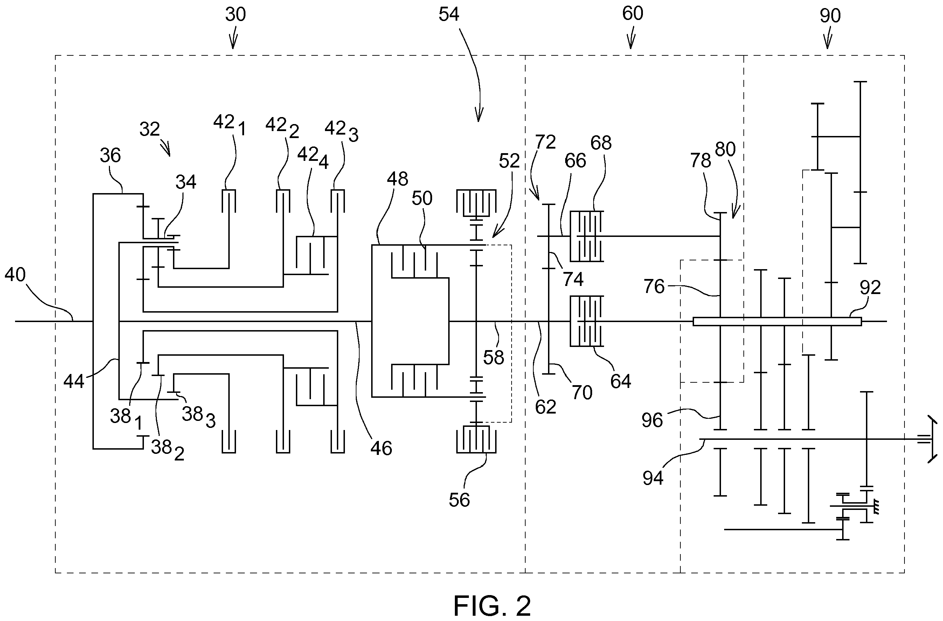

Die Figur 2 zeigt ein Getriebeschema der zuvor als mögliche Konfiguration beschriebenen Getriebestruktur mit einem Hauptschaltgetriebe 30, einem Nachschaltgetriebe 60 und einem Gruppenschaltgetriebe 90. Das Hauptschaltgetriebe 30 ist vorliegend mit einem Planetenradgetriebe 32 mit vier Übersetzungen ausgestattet. Hierbei kämmt eine 3-fache Planetenwalze 34 einerseits mit einem Hohlrad 36 und andererseits mit drei Sonnenrädern 38₁, 38₂, 38₃. Das Hohlrad 36 ist antriebsmäßig mit einer Antriebswelle 40 verbunden, die ihrerseits ein Antriebsmoment von dem Antriebsmotor 22 erhält. Jedes der drei Sonnenräder 38₁, 38₂, 38₃ kann über jeweils eine der drei Schaltelemente 42₁, 42₂, 42₃ gegenüber einem stehenden Bauteil, beispielsweise ein Gehäuse, des Hauptschaltgetriebes 30 gegen Drehung gehalten werden. Ein weiteres Schaltelement 42₄ ist vorgesehen, um eine drehfeste Verbindung zwischen den Sonnenrädern 38₂ und 38₃ herzustellen. Ein Abtrieb erfolgt über den Planetenradträger 44 auf eine Zwischenwelle 46. Die Zwischenwelle 46 treibt ein Antriebselement 48 an, welches einerseits als Kupplungskorb für ein als Anfahrkupplung geeignetes Schaltelement 50 und andererseits als Planetenradträger für ein Planetenradgetriebe 52 einer Reversiereinheit 54 dient. Ein Reversieren erfolgt über ein Schließen eines weiteren Schaltelements 56 bei gleichzeitig geöffneten Schaltelement 50; ein Vorwärtsantrieb folglich bei geschlossenem Schaltelement 50 und geöffneten Schaltelement 56. Eine Abtriebswelle 58 wird entsprechend entweder angetrieben über das Schaltelement 50 oder über das Planetenradgetriebe 52 bei geschlossenem Schaltelement 56.

Bei der vorliegend beschriebenen möglichen Konfiguration einer Getriebestruktur verlässt über die Abtriebswelle 58 der Kraft- und Momentenfluss das Hauptschaltgetriebe 30 und wird an eine Hauptwelle 62 des Nachschaltgetriebes 60 übergeben. Das Nachschaltgetriebe 60 kann in Vorgelegebauweise ausgeführt sein. Auf der Hauptwelle 62 sind ein Festrad 70 und ein Schaltelement 64 angeordnet. Mit dem Schaltelement 64 kann ein Kraft- und Momentenfluss über die Hauptwelle 62 geschaltet oder unterbrochen werden. Das Festrad 70 ist Teil einer eingangsseitigen Stirnradstufe 72 und kämmt mit einem Festrad 74 auf einer Gegenwelle 66. Auf der Gegenwelle 66 ist ein weiteres Schaltelement 68 angeordnet. Mit dem Schaltelement 66 kann ein Kraft- und Momentenfluss über die Gegenwelle 68 geschaltet oder unterbrochen werden. Weiterhin weist das Nachschaltbetriebe (60) ein Festrad 76 und ein Festrad 78 auf, welche eine ausgangsseitige Stirnradstufe 80 bilden.

Wie vorliegend dargestellt, ist im Kraft- und Momentenfluss nachfolgend ein Gruppenschaltgetriebe 90 angeordnet. Das Gruppenschaltgetriebe 90 ist in Vorgelegebauweise mit einer Hauptwelle 92 und einer Gegenwelle 94 ausgeführt. Das Gruppenschaltgetriebe 90 umfasst vorliegend vier Schaltgruppen, so dass vier Zahnradpaarungen in drei Zahnradebenen vorgesehen sind. Jede Zahnradpaarung besteht jeweils aus einem Festrad und einem Losrad. Bei dem gezeigten Gruppenschaltgetriebe 90 sind die Festräder der Hauptwelle 92 und die Losräder der Gegenwelle 94 zugeordnet, was aber lediglich eine mögliche Ausgestaltung ist. Im Rahmen dieser Beschreibung wird lediglich auf die in Figur 2 gezeigte äußerst linke Zahnradpaarung, bestehend aus dem Festrad 76, welches bereits im Zusammenhang mit dem Nachschaltgetriebe 60 beschrieben wurde, und dem Losrad 96, eingegangen. Eine weitere Beschreibung des Gruppenschaltgetriebes 90 erfolgt nicht.

Aus funktionaler Sicht teilen sich das Nachschaltgetriebe 60 und das Gruppenschaltgetriebe 90 das Festrad 76. Wie bereits beschrieben, bildet das Festrad 76 zusammen mit dem Festrad 78 die ausgangsseitige Stirnradstufe 80 des Nachschaltgetriebes 60. Außerdem bildet das Festrad 76 zusammen mit dem auf der Gegenwelle 94 angeordneten Losrad 96 eine der Schaltgruppen des Gruppenschaltgetriebes 90. Somit ergibt sich trotz zwischen dem Hauptschaltgetriebe 30 und dem Gruppenschaltgetriebe 90 angeordneten Nachschaltgetriebe 60 ein nur geringer Zuwachs an axialer Breite der gesamten Anordnung, da die ausgangsseitige Stirnradstufe 80 des Nachschaltgetriebes 60 und eine der Schaltgruppen des Gruppenschaltgetriebes 90 funktional integriert sind.

Die folgende Tabelle soll exemplarisch einige Übersetzungsverhältnisse und Ausgangsdrehzahlen in Umdrehungen pro Minute des Hauptschaltgetriebes 30, Drehzahlen in Umdrehungen pro Minute der Hauptwelle 92 des Gruppenschaltgetriebes 90 und Fahrgeschwindigkeiten in Kilometer pro Stunde des Arbeitsfahrzeugs darstellen. Es ist der Fall angenommen, dass die Drehzahl des Antriebsmotors 2100 Umdrehungen pro Minute beträgt, das Hauptschaltgetriebe 30 vier Schaltstufen umfasst und das Gruppenschaltgetriebe 90 in der Schaltgruppe mit der kürzesten Übersetzung betrieben wird, welche als Schaltgruppe A bezeichnet werden kann.

| Schalt stufe | Übersetzung Hauptschaltgetriebe | Ausgangsdrehzahl Hauptschaltgetriebe | Eingangsdrehzahl Gruppenschaltgetriebe | Fahrgeschwindigkeit |
|---|---|---|---|---|
| A1 | 0,566 | 1189 | 1189 | 2,4 |
| A2 | 0,682 | 1432 | 1432 | 2,89 |
| A3 | 0,816 | 1714 | 1714 | 3,46 |
| A4 | 1 | 2100 | 2100 | 4,23 |
| A5 | 0,566 | 1189 | 2566 | 5,17 |
| A6 | 0,682 | 1432 | 3091 | 6,23 |
| A7 | 0,816 | 1714 | 3699 | 7,46 |
| A8 | 1 | 2100 | 4533 | 9,14 |

Zu erkennen ist, dass die Abfolge der Übersetzungen 0,566 bis 1 des Hauptschaltgetriebes 30 zweimal durchlaufen werden. Während die Übersetzungen ein erstes Mal durchlaufen werden ist der Kraft- und Momentenfluss über die Hauptwelle 62 und das Schaltelement 64 des Nachschaltgetriebes 60 geschaltet. Ein zweites Mal werden die Übersetzungen durchlaufen, wenn der Kraft- und Momentenfluss über die Gegenwelle 66 und das Schaltelement 68 des Nachschaltgetriebes 60 geschaltet ist.

### Bezugszeichenliste

- 10: landwirtschaftliches Arbeitsfahrzeug
- 12: Kabine
- 14: Fahrzeugachse
- 20: Antriebsstrang
- 22: Antriebsmotor
- 26: Fahrzeugachse
- 30: Hauptschaltgetriebe
- 32: Planetenradgetriebe
- 34: Planetenwalze
- 36: Hohlrad
- 38: Sonnenrad
- 40: Antriebswelle
- 42: Schaltelement
- 44: Planetenradträger
- 46: Zwischenwelle
- 48: Antriebselement
- 50: Schaltelement
- 52: Planetenradgetriebe
- 54: Reversiereinheit
- 56: Schaltelement
- 58: Abtriebswelle
- 60: Nachschaltgetriebe
- 62: Hauptwelle
- 64: Schaltelement
- 66: Gegenwelle
- 68: Schaltelement
- 70: Festrad
- 72: Stirnradstufe
- 74: Festrad
- 76: Festrad
- 78: Festrad
- 80: Stirnradstufe
- 90: Gruppenschaltgetriebe
- 92: Hauptwelle
- 94: Gegenwelle
- 100: Differentialgetriebe

## Patentansprüche

1. Antriebsstrang (20) für ein landwirtschaftliches Arbeitsfahrzeug (10), umfassend einen Antriebsmotor (22),
ein lastschaltfähiges Getriebe (30) und
eine über den Antriebsmotor (22) und das lastschaltfähige Getriebe (30) angetriebene Fahrzeugachse (26),
ein zwischen dem lastschaltfähigen Getriebe (30) und der Fahrzeugachse (26) angeordnetes Nachschaltgetriebe (60) mit mindestens zwei Übersetzungen, wobei eine erste Übersetzung über ein auf einer Hauptwelle (62) des Nachschaltgetriebes (60) angeordnetes erstes Schaltelement (64) und eine zweite Übersetzung über ein auf einer Gegenwelle (66) des Nachschaltgetriebes (60) angeordnetes zweites Schaltelement (68) schaltbar ist, und
ein zwischen dem Nachschaltgetriebe (60) und der Fahrzeugachse (26) angeordnetes Gruppenschaltgetriebe (90) in Vorgelegebauweise mit einer Hauptwelle (92) und einer Gegenwelle (94), wobei auf der Hauptwelle (92) des Gruppenschaltgetriebes (90) ein Festrad (76) und auf einer mit der Gegenwelle (66) des Nachschaltgetriebes (60) über das zweite Schaltelement (68) verbindbaren und koaxial zur Gegenwelle (66) des Nachschaltgetriebes (60) angeordneten Welle des Nachschaltgetriebes (60) ein Festrad (78) angeordnet ist, wobei die zuvor genannten Festräder (76, 78) eine ausgangsseitige Stirnradstufe (80) des Nachschaltgetriebes (60) bilden und wobei das auf der Hauptwelle (92) des Gruppenschaltgetriebes (90) angeordnete Festrad (76) zusammen mit einem auf der Gegenwelle (94) des Gruppenschaltgetriebes (90) angeordneten Losrad (96) außerdem eine von mehreren Schaltgruppen des Gruppenschaltgetriebes (90) bildet.

2. Antriebsstrang (20) nach Anspruch 1, **dadurch gekennzeichnet, dass** das erste und das zweite Schaltelement (64, 68) als hydraulisch angesteuerte Nasskupplungen ausgeführt sind.

3. Antriebsstrang (20) nach Anspruch 1 oder 2, **dadurch gekennzeichnet, dass** das lastschaltfähiges Getriebe (30) mit einer geometrischen Stufung von ungefähr 20% ausgeführt ist.

4. Antriebsstrang (20) nach Anspruch 3, **dadurch gekennzeichnet, dass** das Nachschaltgetriebe (60) in Vorgelegebauweise ausgeführt ist.

5. Antriebsstrang (20) nach Anspruch 4, **dadurch gekennzeichnet, dass** die ausgangsseitige Stirnradstufe (80) des Nachschaltgetriebes (60) in einem Gehäuse des Gruppenschaltgetriebes (90) angeordnet ist.

6. Verfahren zur Steuerung eines Antriebsstrangs (20) nach einem der Ansprüche 1 bis 5 mit einem zwischen dem Antriebsmotor (22) und dem Nachschaltgetriebe (60) als Anfahrkupplung geeigneten dritten Schaltelement (50), bei dem während einem Umschalten des Kraftschlusses von dem ersten oder dem zweiten Schaltelement (64, 68) auf das jeweils andere Schaltelement (68, 64) das dritte Schaltelement (50) zur Antriebskraftunterbrechung moduliert wird.

## Claims

1. Drive train (20) for an agricultural working vehicle (10), comprising
a drive engine (22),
a power-shift transmission (30), and
a vehicle axle (26) which is driven via the drive engine (22) and the power-shift transmission (30),
a rear-mounted transmission (60) with at least two transmission ratios which is arranged between the power-shift transmission (30) and the vehicle axle (26), it being possible for a first transmission ratio to be selected via a first shifting element (64) which is arranged on a main shaft (62) of the rear-mounted transmission (60), and for a second transmission ratio to be selected via a second shifting element (68) which is arranged on a countershaft (66) of the rear-mounted transmission (60), and
a group transmission (90), which is arranged between the rear-mounted transmission (60) and the vehicle axle (26), of countershaft design with a main shaft (92) and a countershaft (94), a fixed gear (76) being arranged on the main shaft (92) of the group transmission (90), and a fixed gear (78) being arranged on a shaft of the rear-mounted transmission (60), which shaft can be connected via the second shifting element (68) to the countershaft (66) of the rear-mounted transmission (60) and is arranged coaxially with respect to the countershaft (66) of the rear-mounted transmission (60), the abovementioned fixed gears (76, 78) forming an output-side spur gear stage (80) of the rear-mounted transmission (60), and, moreover, the fixed gear (76) which is arranged on the main shaft (92) of the group transmission (90) forming, together with an idler gear (96) which is arranged on the countershaft (94) of the group transmission (90), one of a plurality of shifting groups of the group transmission (90) .

2. Drive train (20) according to Claim 1, **characterized in that** the first and the second shifting element (64, 68) are configured as hydraulically actuated wet clutches.

3. Drive train (20) according to Claim 1 or 2, **characterized in that** the power-shift transmission (30) is configured with geometric stepping of approximately 20%.

4. Drive train (20) according to Claim 3, **characterized in that** the rear-mounted transmission (60) is of countershaft design.

5. Drive train (20) according to Claim 4, **characterized in that** the output-side spur gear stage (80) of the rear-mounted transmission (60) is arranged in a housing of the group transmission (90).

6. Method for controlling a drive train (20) according to one of Claims 1 to 5 with a third shifting element (50) which is suitable as a start-up clutch between the drive engine (22) and the rear-mounted transmission (60), in the case of which method, during a switchover of the power flow from the first or the second shifting element (64, 68) to the respective other shifting element (68, 64), the third shifting element (50) is modulated in order to interrupt the drive power.

## Revendications

1. Chaîne cinématique (20) pour un véhicule de travail agricole (10), comprenant
un moteur d'entraînement (22),
une boîte de vitesses commandée sous charge (30) et un essieu de véhicule (26) entraîné par le biais du moteur d'entraînement (22) et de la boîte de vitesses commandée sous charge (30),
un réducteur (60) disposé entre la boîte de vitesses commandée sous charge (30) et l'essieu de véhicule (26), avec au moins deux rapports de démultiplication, un premier rapport de démultiplication pouvant être commuté par le biais d'un premier élément de commutation (64) disposé sur un arbre principal (62) du réducteur (60) et un deuxième rapport de démultiplication pouvant être commuté par le biais d'un deuxième élément de commutation (68) disposé sur un arbre intermédiaire (66) du réducteur (60), et
une boîte de vitesses à groupes-relais (90) disposée entre le réducteur (60) et l'essieu de véhicule (26) dans une construction à transmission intermédiaire avec un arbre principal (92) et un arbre intermédiaire (94), une roue fixe (76) étant disposée sur l'arbre principal (92) de la boîte de vitesses à groupes-relais (90) et une roue fixe (78) étant disposée sur un arbre du réducteur (60) pouvant être connecté à l'arbre intermédiaire (66) du réducteur (60) par le biais du deuxième élément de commutation (68) et disposé coaxialement par rapport à l'arbre intermédiaire (66) du réducteur (60), les roues fixes susmentionnées (76, 78) formant un étage à pignons droits côté sortie (80) du réducteur (60), et la roue fixe (76) disposée sur l'arbre principal (92) de la boîte de vitesses à groupes-relais (90), conjointement avec une roue folle (96) disposée sur l'arbre intermédiaire (94) de la boîte de vitesses à groupes-relais (90), formant en outre un parmi plusieurs groupes-relais de la boîte de vitesses à groupes-relais (90).

2. Chaîne cinématique (20) selon la revendication 1, **caractérisée en ce que** le premier et le deuxième élément de commutation (64, 68) sont réalisés sous forme d'embrayages humides à commande hydraulique.

3. Chaîne cinématique (20) selon la revendication 1 ou 2, **caractérisée en ce que** la boîte de vitesses commandée sous charge (30) est réalisée avec une gradation géométrique d'environ 20 %.

4. Chaîne cinématique (20) selon la revendication 3, **caractérisée en ce que** le réducteur (60) est réalisé dans une construction à transmission intermédiaire.

5. Chaîne cinématique (20) selon la revendication 4, **caractérisée en ce que** l'étage à pignons droits côté sortie (80) du réducteur (60) est disposé dans un boîtier de la boîte de vitesses à groupes-relais (90) .

6. Procédé de commande d'une chaîne cinématique (20) selon l'une quelconque des revendications 1 à 5, comprenant un troisième élément de commutation (50) approprié en tant qu'embrayage de démarrage entre le moteur d'entraînement (22) et le réducteur (60), dans lequel, pendant une commutation du flux de forces du premier ou du deuxième élément de commutation (64, 68) à l'autre élément de commutation respectif (68, 64), le troisième élément de commutation (50) est modulé pour interrompre la force d'entraînement.
